# EUROPÄISCHE PATENTANMELDUNG

(11) **EP 3 217 101 A1**
(43) Veröffentlichungstag der Anmeldung: **13.09.2017**
(21) Anmeldenummer: 17159764.4
(22) Anmeldetag: 08.03.2017
(51) Int. Cl.: F24D 3/10, F24D 19/10

(54) **VERFAHREN ZUR HYDRAULISCHEN ENTKOPPLUNG MEHRERER, PARALLEL GESCHALTETER FLUIDKREISLÄUFE**

(30) Priorität: 08.03.2016 DE 102016002690
(71) Anmelder: PAW GmbH & Co. KG, 31789 Hameln (DE)
(72) Erfinder: Pärisch, Peter, 31785 Hameln (DE)
(74) Vertreter: Jabbusch, Matthias

(57) **Zusammenfassung**

Die Erfindung betrifft ein Verfahren zur hydraulischen Entkopplung mehrerer, parallel geschalteter Fluidkreisläufe mit jeweils einer Pumpe, dadurch gekennzeichnet, dass der Differenzdruck zwischen Kesselvorlauf und Kesselrücklauf mit einem Regler erfasst wird und die Drehzahl mindestens einer Pumpe im Kesselkreislauf so geändert wird, dass ein hinterlegter Sollwert, insbesondere Null, erreicht wird.

Die Erfindung betrifft des Weiteren eine Heizungsanlage mit einer Verteilung, insebsondere mit einem Heizkreisverteiler auf mindestens zwei Heizkreisläufe mit jeweils einer Heizkreispumpe, wobei zumindest über eine zentrale Vorlaufund Rücklaufleitung mit mindestens einer Kesselkreispumpe Heizmedium zu der Verteilung geführt ist bzw. abgeführt ist.

## Beschreibung

Die Erfindung betrifft ein Verfahren zur hydraulischen Entkopplung mehrerer, parallel geschalteter Fluidkreisläufe mit jeweils einer drehzahlvariablen Pumpe nach dem Oberbegriff des Anspruchs 1.

Die Erfindung betrifft des Weiteren eine Heizungsanlage mit einer Verteilung, insbesondere mit einem Heizkreisverteiler auf mindestens zwei Heizkreisläufe mit jeweils einer Heizkreispumpe, wobei zumindest über eine zentrale Vorlauf- und Rücklaufleitung mit mindestens einer Kesselkreispumpe Heizmedium zu der Verteilung geführt ist bzw. abgeführt ist.

Ohne Beschränkung der Allgemeinheit seien im Folgenden die parallel geschalteten Fluidkreisläufe Heizungskreisläufe und die Verteilung ein kompakter Heizkreisverteiler. Analog kann es sich auch um eine Kälteverteilung handeln.

In der Heizungstechnik größerer Gebäude ist es Stand der Technik mehrere Heizkreisläufe an einem Heizkreisverteiler anzuschließen. Dies entspricht einer Parallelschaltung der Heizkreisläufe. Die meisten der Heizkreisläufe verfügen über eine eigene Pumpe und einen eigenen Mischer, mit dem eine witterungsgeführte Rücklaufbeimischung für jeden Heizkreislauf realisiert wird. Zwischen der gemeinsamen Vorlaufleitung und der gemeinsamen Rücklaufleitung befindet sich ein Wärmeerzeuger oder ein Wärmespeicher. Ohne Beschränkung der Allgemeinheit sei im Folgenden der Wärmeerzeuger ein Kessel und eine in diesem Kreislauf befindliche Pumpe eine Kesselkreispumpe.

Ein hydraulischer Abgleich der Heizkreisläufe auf dem Heizkreisverteiler gewährleistet, dass jeder Heizkreislauf mit der Wärmeleistung versorgt wird, die er benötigt (sofern die Vorlauftemperatur in den Heizkreisverteiler ausreichend ist). Hier kennt der Stand der Technik drei Möglichkeiten.

Erstens sind es drosselnde Armaturen (kurz: Ventile) wie Differenzdruckregler. An ihnen wird üblicherweise über eine Federkraft, die auf eine Membran wirkt, ein Soll-Differenzdruck eingestellt. Die zwei Seiten der Membran sind mit druckübertragenden Rohren mit Vor- und Rücklauf verbunden. Die Membran verändert abhängig von Soll-/Ist-Differenz den Ventilsitz, also den Strömungsquerschnitt, so dass sich zwischen Vorlauf und Rücklauf ein konstanter Differenzdruck einstellt. Dieser passt sich dann dynamisch an den Wärmebedarf/Volumenstrom an. Differenzdruckregler haben den Nachteil, dass dem Wasser beim Pumpen zugeführte Strömungsenergie ungenutzt verwirbelt wird. Zudem benötigen Differenzdruckregler einen zusätzlichen Druckverlust, um ihre Ventilautorität auszuüben. An den Pumpen muss eine höhere Regelkennlinie (zum Beispiel Proportionaldruckkennlinie H-v) gewählt werden, um den zusätzlichen Druckverlust auszugleichen. Das erhöht den Stromverbrauch der Pumpen signifikant. Außerdem sind Differenzdruckregler in der Anschaffung teuer. DE 10 2010 022 763 beschreibt ein Verfahren wobei der Volumenstrom und der Differenzdruck in jedem Heizkreislauf erfasst wird und von einer Recheneinheit die Ventilstellung derart beeinflusst wird, dass der Sollwert eingehalten wird. Dieses Verfahren für den Abgleich der Heizkreisläufe ist ebenfalls teuer und benötigt viel Energie. EP1163478 beschreibt ein Verfahren zum Betreiben einer Heizungsanlage mit Kesselkreispumpe, wobei ein Ventil mit Volumenstrommesseinheit eingebaut ist, dadurch gekennzeichnet, dass ein Überschreiten eines maximalen Volumenstroms von einem Regler durch Schließen des Ventils oder durch Drehzahländerung der Pumpe verhindert wird.

Zweitens können Pumpen in ihrer Drehzahl angepasst werden, um einen gewünschten Zustand zu erzeugen. EP 2 775 370 beschreibt einen regelungstechnischen Ansatz, den hydraulischen Abgleich mit Volumenstromsensoren und drehzahlveränderbaren Pumpen zu erreichen und den Stromverbrauch der Pumpen zu senken. Es werden keine Ventile eingesetzt. Jedoch ist ein großer apparativer Aufwand für Sensoren und Regeltechnik notwendig, der hohe Investitionskosten und eine aufwändige Installation nach sich zieht.

Eine dritte Möglichkeit ist es, den Heizkreisverteiler differenzdruckarm zu gestalten, indem ein hydraulischer Kurzschluss zwischen Vorlauf und Rücklauf, zum Beispiel mit einer hydraulischen Weiche (z. B. EP 1 612 489 oder DE 199 12 588), realisiert wird. Dadurch wird die gegenseitige Beeinflussung reduziert und die Pumpen können selbstregelnd bei niedriger Regelkennlinie betrieben werden. Alle Kreisläufe inklusive dem Kesselkreislauf werden sozusagen entkoppelt. Nachteilig ist jedoch, dass eine weitere Pumpe im Kesselkreislauf notwendig wird, die die Wärme zur hydraulischen Weiche transportiert. Fällt diese Pumpe aus, liegt die gesamte Wärmeversorgung darnieder. Der zweite große Nachteil besteht darin, dass die Volumenströme des Kesselkreislaufs und der Heizkreisläufe in der Praxis nicht abgeglichen (annähernd gleich groß) sind und somit häufig die hohe Vorlauftemperatur dem Rücklauf beigemischt wird (oder umgekehrt). Die höhere Rücklauftemperatur reduziert die Effizienz des Wärmeerzeugers und kostet Brennstoff. Eine höhere Vorlauftemperatur erhöht die thermischen Verluste. Zur Verbesserung des Abgleichs von hydraulischen Weichen ist es denkbar, den Volumenstrom vor und nach der hydraulischen Weiche zu messen und die Drehzahl der Pumpe(n) davor und/oder danach anzupassen. Alternative Lösungsansätze verwenden die Ein- und Austrittstemperaturen und gleichen die Volumenströme so ab, dass möglichst wenig Beimischung stattfindet (vgl. EP 0 892 223). In jedem Fall bleibt der Nachteil bestehen, dass die Wärmeversorgung ausfällt, wenn die Kesselkreispumpe ausfällt.

Es ist Aufgabe der vorliegenden Erfindung ohne drosselnde Armaturen einen differenzdruckarmen Heizkreisverteiler zu erzeugen und dabei den hohen Stromverbrauch des Stands der Technik zu vermeiden. Weiterhin soll durch Verzicht auf einen hydraulischen Kurzschluss ein brennstoffsparender Betrieb der Heizungsanlage ermöglicht werden. Gleichzeitig soll eine vorhandene Vorrichtung ohne großen Aufwand bei Bestandsanlagen nachrüstbar sein.

Weiterhin soll eine Vorrichtung insbesondere zum Durchführen des Verfahrens aufgezeigt werden, nämlich eine entsprechende Heizungsanlage.

Die verfahrensseitige Lösung dieser Aufgabe ergibt sich aus den Merkmalen aus Patentanspruch 1.

Die Heizungsanlage weist eine zentrale Vorlaufleitung vom Wärmeerzeuger oder vom Wärmespeicher kommend und eine zentrale Rücklaufleitung auf. Die zentrale Vor- und Rücklaufleitung wird auf mindestens zwei Heizkreisläufe mit jeweils einer Heizkreispumpe verteilt, insbesondere mit einem Heizkreisverteiler. Im Kesselkreislauf befindet sich wenigstens eine Pumpe.

Gemäß Anspruch 1 wird in der zentralen Vorlauf- und Rücklaufleitung der Heizkreisverteilung der Differenzdruck von einem Regler erfasst und mindestens eine Pumpe über eine Ansteuerungsleitung oder drahtlos so angesteuert, dass ein hinterlegter Sollwert eingehalten wird. Der Differenzdruck sollte möglichst nah an der Verzweigung, insbesondere an den Anschlüssen des Heizkreisverteilers, erfasst werden. Durch eine Korrektur des Sollwerts können jedoch auch Strömungswiderstände bei weiter entfernter Messposition berücksichtigt werden.

In einer vorteilhaften Ausgestaltung ist vorgesehen, dass als Sollwert ein Wert von Null oder nahe Null gewählt wird. Das ist insbesondere dann sinnvoll, wenn direkt an den Anschlüssen des Heizkreisverteilers gemessen wird. Durch einen Sollwert von Null oder nahe Null wird die Verteilung bzw. der Heizkreisverteiler differenzdruckarm und die Heizkreispumpen können ohne Berücksichtigung der gegenseitigen Beeinflussung eingestellt und betrieben werden. Die Heizkreisläufe werden untereinander entkoppelt, sie sind jedoch im Unterschied zur hydraulischen Weiche immer noch mit dem Kesselkreis gekoppelt. Die Kesselkreispumpe muss lediglich eine geringe Förderhöhe aufbringen, um die Druckverluste des Kesselkreislaufs auszugleichen. Sie muss jedoch in der Lage sein, den gesamten Auslegungsvolumenstrom zu liefern. Ein hydraulischer Bypass / Kurzschluss zwischen zentraler Vorlaufleitung und zentraler Rücklaufleitung existiert nicht, so dass es nicht zur Beimischung kommen kann. Bei einem Ausfall der Kesselkreispumpe ist es den Heizkreispumpen weiterhin möglich, einen Volumenstrom durch die stehende Kesselkreispumpe zu erzielen.

Der Differenzdruck sollte vorteilhafterweise mit einem Differenzdrucksensor direkt vor der Verteilung gemessen werden. Um auf einen Sollwert von Null zu regeln ist es sinnvoll, wenn der Sensor auch negative Differenzdrücke erfassen und ausgeben kann.

Alternativ ist es möglich, den Differenzdruck im Regler rechnerisch zu ermitteln, indem sowohl in der zentralen Vorlaufleitung als auch in der zentralen Rücklaufleitung ein absoluter bzw. ein relativer Drucksensor installiert ist. Beim Relativdruck wird gegenüber der Umgebung gemessen, während der Absolutdruck unabhängig vom Umgebungsdruck ist. Bei der Differenzbildung eliminiert sich die Bezugsgröße, so dass beide Drucksensoren verwendet werden können. Diese Lösung hat den Vorteil, dass der Anlagendruck überwacht werden kann. Bei Druckabfall unter einen Schwellwert kann ein Alarmsignal ausgelöst werden.

Je weiter die Messposition von der Verteilung entfernt ist, desto größer ist der Messfehler zum tatsächlichen Differenzdruck des Heizkreisverteilers. Der Messfehler ist ein Druckverlust und steigt linear bis quadratisch mit dem Volumenstrom an. Somit ist es gemäß einer vorteilhaften Ausgestaltung vorgesehen, dass der Regler den Volumenstrom in der zentralen Vorlauf- oder Rücklaufleitung erfasst und den Sollwert mit einem linearen oder quadratischen Korrekturterm beaufschlagt. Beispielsweise können so die Druckverluste der Kesselanschlüsse des Heizkreisverteilers korrigiert werden. Dabei ist es irrelevant, wie der Volumenstrom erfasst wird. Denkbar ist die direkte Messung mit Volumenstromsensoren. Indirekt ist es denkbar, nicht nur die Differenz, sondern auch die Höhe der Relativ- oder Absolutdrucksensoren auszuwerten. Weiterhin geben einige Pumpen ein Signal aus, welches dem Volumenstrom entspricht oder mit Hilfe des Pumpenkennfelds in einen Volumenstrom umgerechnet werden kann.

Pumpen haben eine Mindestdrehzahl, die einem minimalen Druck entspricht. Um den minimal erzeugbaren Druck zu reduzieren, kann es sinnvoll sein, eine Schwerkraftbremse vorzusehen, die von einer Feder beaufschlagt wird. Entspricht ihr Öffnungsdruck dem minimalen Druck der Pumpe bei kleinster Drehzahl, ist es möglich bei kleinen Volumenströmen näher an einen Differenzdruck von Null heran zu regeln. Dadurch wird erreicht, dass die Pumpe bis auf einen Druck von Null herunter modulieren kann.

Ergänzend zu einer Drehzahlregelung kann es sinnvoll sein, die Förderleistung der Pumpe gemäß dem Stand der Technik mit einer Parallelschaltung oder mit einem Bypass zu steuern.

Weiterhin ist es wirtschaftlich sinnvoll, alle benötigten Komponenten zu einer Baugruppe zusammenzufassen.

Die vorrichtungsseitige Lösung der Aufgabe ergibt sich aus den Merkmalen des Patentanspruchs 7, nämlich dass ein Regler zum Erfassen des Differenzdrucks zwischen zentraler Vorlaufleitung und zentraler Rücklaufleitung vorgesehen ist, dem ein hinterlegter Soll-Differenzdruck zugeordnet ist und der mit der Kesselkreispumpe verschaltet ist.

Erfindungsgemäß wird den zentralen Versorgungsleitungen ein Regler zugeordnet. Dieser ist mit der Kesselkreispumpe verschaltet, diese ist vorzugsweise eine Drehzahl veränderliche Pumpe. Die Druckdifferenz zwischen beiden Leitungen kann gegen Null geregelt werden, dies ist insofern erleichtert, dass außerhalb dieser Leitungen gemessen wird.

Bei dieser Heizungsanlage ist kein Medien-Kurzschluss durch einen Verteiler gegeben. Dadurch sind die einzelnen Heizkreisläufe nicht von den zentralen Vorlauf- und Rücklaufleitungen und somit auch nicht vom Heizkessel entkoppelt.

Die erfindungsgemäße Heizungsanlage arbeitet drucklos. Nachteile einer hydraulischen Weiche treten nicht auf, der konstruktive Aufwand ist verringert.

Nach einer nächsten Weiterbildung der erfindungsgemäßen Vorrichtung ist vorgesehen, dass im Kesselkreislauf zumindest eine Schwerkraftbremse angeordnet ist, deren Öffnungsdruck zumindest gleich dem minimalen Druck der Kesselkreispumpe bei Minimaldrehzahl entspricht.

Ein Ausführungsbeispiel der Erfindung, aus dem sich weitere erfinderische Merkmale ergeben, ist in der Zeichnung dargestellt. Es zeigen:
- Figur 1:: eine Heizungsanlage nach dem Stand der Technik, in einer schematischen Ansicht,
- Figur 2:: eine schematische Ansicht einer erfindungsgemäßen Heizungsanlage nach einem ersten Ausführungsbeispiel und
- Figur 3:: eine schematische Ansicht einer erfindungsgemäßen Heizungsanlage nach einem zweiten Ausführungsbeispiel.

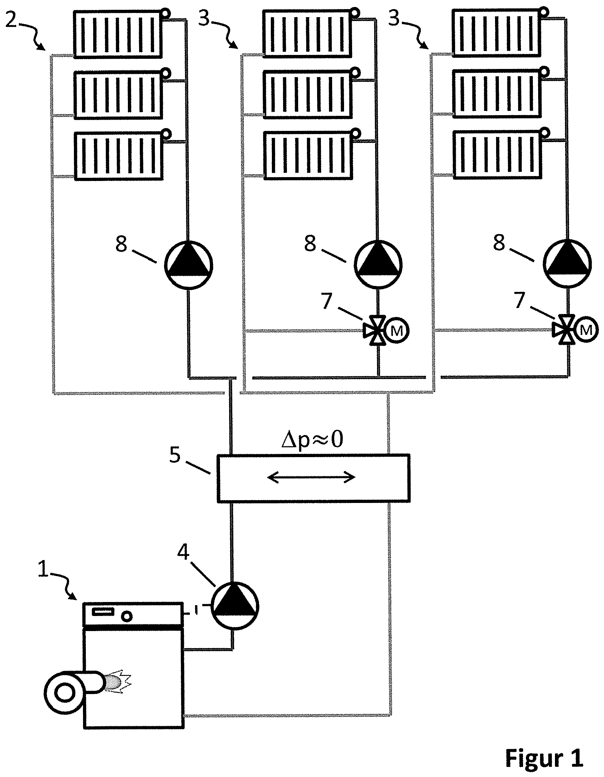

Die Heizungsanlage nach dem Stand der Technik in Figur 1 weist einen Heizkessel 1 und eine Heizkreisverteilung auf einen ungemischten Heizkreislauf 2 sowie auf zwei witterungsgeführte Heizkreisläufe 3 mit Mischer 7 auf. Eine Heizkreisverteilung kann entweder bauseitig mit Rohren und T-Stücken aufgebaut werden oder es werden industriell hergestellte Heizkreisverteiler verwendet. Somit sind die Heizkreisläufe mit selbstregelnden Heizkreispumpen 8 und einer hydraulischen Weiche 5 unterhalb der Verteilung ausgestattet. Die hydraulische Weiche 5 bezweckt, dass die Verteilung differenzdruckarm wird, und die Heizkreisläufe 2, 3 sich weniger stark gegenseitig beeinflussen. Dadurch können unterschiedliche Volumenströme im Kesselkreis sowie im Heizkreislauf eingestellt werden. Die Heizkreispumpen sind einfach einzustellen und stromsparend im Betrieb. Nachteilig ist jedoch, dass eine weitere Pumpe, die Kesselkreispumpe 4, erforderlich ist. Fällt sie aus, fällt die komplette Wärmeversorgung des Gebäudes aus. Der fehlende Abgleich der Volumenströme ober- und unterhalb der hydraulischen Weiche sorgt dafür, dass dem Rücklauf in der Regel heißes Wasser aus dem Vorlauf zugemischt wird. Dies erhöht den Brennstoffverbrauch des Wärmeerzeugers, wie zum Beispiel Wärmepumpe oder Brennwertkessel, dessen Effizienz maßgeblich von der Rücklauftemperatur beeinflusst wird.

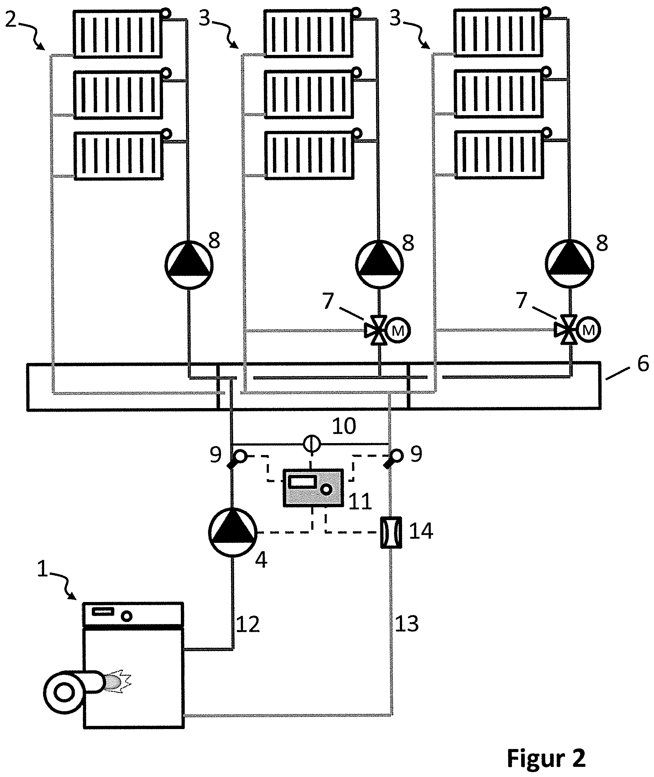

Figur 2 zeigt die erfindungsgemäße Heizungsanlage mit einem Heizkessel 1 sowie einem industriell hergestellten Heizkreisverteiler 6, mit einem ungemischten Heizkreislauf 2 sowie zwei witterungsgeführten Heizkreisläufen 3 mit Mischer. Beim erfindungsgemäßen Verfahren kann der Differenzdruck direkt unterhalb des Heizkreisverteilers erfasst werden, zum Beispiel mit einem Differenzdrucksensor 10. Der Regler 11 steuert oder regelt die Drehzahl der Kesselkreispumpe 4 derart, dass ein Sollwert, zum Beispiel Null, eingehalten wird. Wenn eine Information über den Volumenstrom 14 zur Verfügung steht, können sogar die Druckverluste in den Anschlüssen des Heizkreisverteilers berücksichtigt werden. Dann wird auf die gemessene Druckdifferenz ein Korrekturterm addiert oder subtrahiert, welcher linear oder quadratisch mit dem Volumenstrom steigt. Auch eine Wärmemengenzählung mit zwei Temperatursensoren 9 könnte am Regler durchgeführt werden, wenn der Volumenstrom erfasst wird.

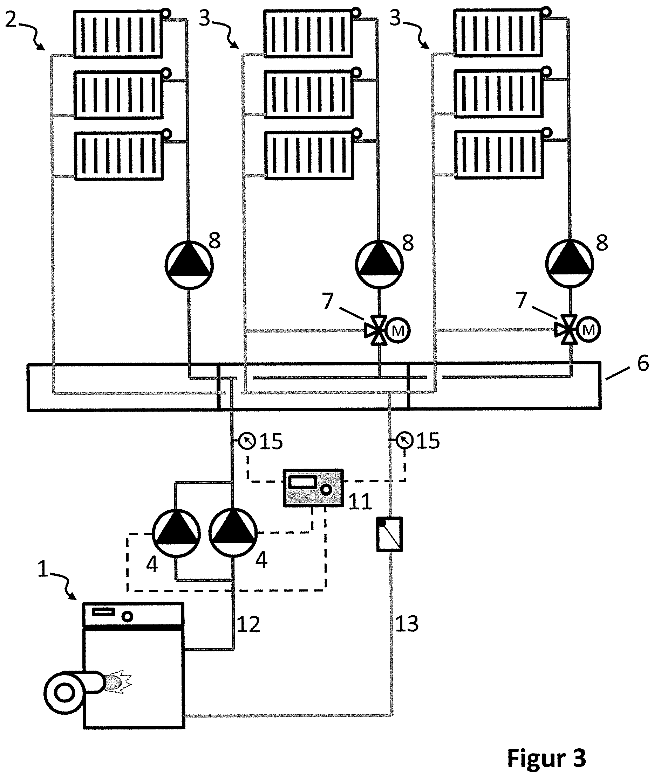

Figur 3 zeigt eine weitere Ausführung der erfindungsgemäßen Heizungsanlage mit einem Heizkessel 1 sowie einem industriell hergestellten Heizkreisverteiler 6, mit einem ungemischten Heizkreislauf 2 sowie zwei witterungsgeführten Heizkreisläufen 3 mit Mischer. Beim erfindungsgemäßen Verfahren können zwei einzelne Drucksensoren 15 an den Anschlüssen des Heizkreisverteilers 6 montiert werden. Der Regler 11 bildet die Differenz und steuert oder regelt die Drehzahl der Kesselkreispumpen 4 derart, dass ein Sollwert, zum Beispiel Null, eingehalten wird. Zur Erzielung hoher Volumenströme bei geringem Druckverlust ist es möglich und bekannt Pumpen parallel zu schalten. Weiterhin überwacht der Regler 11 den Anlagendruck. In Figur 3 ist zudem eine Schwerkraftbremse 16 zu erkennen, welche im Rücklauf sitzt. Ihr Öffnungsdruck sorgt für einen minimalen Druckverlust im Kesselkreislauf. Stimmt der minimale Druckverlust mit dem Pumpendruck bei Minimaldrehzahl überein, verbessert sich das Regelverhalten, weil die Regelung faktisch bis auf null herunter modulieren kann.

## Patentansprüche

1. Verfahren zum Betreiben einer Heizungsanlage mit einer Verteilung, insbesondere einem Heizkreisverteiler (6) auf mindestens zwei Heizkreisläufe (2, 3) mit jeweils einer Heizkreispumpe (8), wobei zumindest über eine zentrale Vorlauf- (12) und Rücklaufleitung (13) mit mindestens einer Kesselkreispumpe (4) Heizmedium zu der Verteilung geführt bzw. abgeführt wird,
**dadurch gekennzeichnet,**
**dass** ein Regler (11) den Differenzdruck zwischen zentraler Vorlaufleitung (12) und zentraler Rücklaufleitung (13) erfasst,
mit einem hinterlegten Soll-Differenzdruck vergleicht und
die Drehzahl mindestens einer Kesselkreispumpe (4) so verändert, dass der Soll-Differenzdruck eingehalten wird.

2. Verfahren nach Anspruch 1, **dadurch gekennzeichnet, dass** der Soll-Differenzdruck 0 mbar beträgt.

3. Verfahren nach Anspruch 1, **dadurch gekennzeichnet, dass** der Soll-Differenzdruck ein Wert zwischen +25 mbar und -25 mbar ist.

4. Verfahren nach einem der vorgenannten Ansprüche, **dadurch gekennzeichnet, dass** der Differenzdruck mit einem Differenzdrucksensor (10) gemessen wird.

5. Verfahren nach einem der Ansprüche 1 bis 4, **dadurch gekennzeichnet, dass** jeweils ein Drucksensor (15) in der zentralen Vorlaufleitung (12) und der zentralen Rücklaufleitung (13) angeordnet ist und der Regler den Differenzdruck berechnet.

6. Verfahren nach einem der vorgenannten Ansprüche, **dadurch gekennzeichnet, dass** der Regler den Volumenstrom im Kesselkreis erfasst und den Soll-Differenzdruck mit einem linearen oder quadratischen Korrekturterm beaufschlagt.

7. Heizungsanlage mit einer Verteilung, insbesondere mit einem Heizkreisverteiler (6) auf mindestens zwei Heizkreisläufe (2, 3) mit jeweils einer Heizkreispumpe (8), wobei zumindest über eine zentrale Vorlauf- (12) und Rücklaufleitung (13) mit mindestens einer Kesselkreispumpe (4) Heizmedium zu der Verteilung geführt ist bzw. abgeführt ist,
**dadurch gekennzeichnet,**
**dass** ein Regler (11) zum Erfassen des Differenzdrucks zwischen zentraler Vorlaufleitung (12) und zentraler Rücklaufleitung (13) vorgesehen ist, dem ein hinterlegter Soll-Differenzdruck zugeordnet ist und der mit der Kesselkreispumpe (4) verschaltet ist.

8. Heizungsanlage nach Anspruch 7, **dadurch gekennzeichnet, dass** im Kesselkreislauf zumindest eine Schwerkraftbremse (16) angeordnet ist, deren Öffnungsdruck zumindest gleich dem minimalen Druck der Kesselkreispumpe (4) bei Minimaldrehzahl ist.
